Europäisches Patentamt

European Patent Office

Office européen des brevets

(19)

(11) Numéro de publication : **0 202 964**
**B1**

(12) **FASCICULE DE BREVET EUROPÉEN**

(45) Date de publication du fascicule du brevet :
27.07.88

(51) Int. Cl.⁴ : **B 60 G 11/04, B 60 G 21/04**

(21) Numéro de dépôt : **86400732.3**

(22) Date de dépôt : **04.04.86**

(54) **Train arrière pour suspension de véhicules automobiles.**

(30) Priorité : **19.04.85 FR 8505975**

(43) Date de publication de la demande :
**26.11.86 Bulletin 86/48**

(45) Mention de la délivrance du brevet :
**27.07.88 Bulletin 88/30**

(84) Etats contractants désignés :
**BE DE GB IT SE**

(56) Documents cités :
**DE-A- 3 122 417**
**DE-A- 3 338 467**
**FR-A-  448 971**
**FR-A- 2 543 073**
**US-A- 3 860 259**
**US-A- 3 912 296**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Gallet, Patrick**
**6, Résidence Tournemine**
**F-91940 Les Ulis (FR)**
Inventeur : **Galles, Henri**
**4, Chemin de Menuel**
**F-78126 Aulnay Sur Mauldre (FR)**

(74) Mandataire : **Saint Martin, René et al**
**Régie Nationale des Usines Renault Direction des**
**Recherches et Développements Service 0804 8-10,**
**Avenue Emile-Zola**
**F-92109 Boulogne Billancourt Cedex (FR)**

# Description

La présente invention se rapporte à un train arrière de suspension pour véhicule automobile. On connaît déjà des trains arrière à essieu souple dont la suspension est assurée par des barres de torsion ou des ressorts hélicoïdaux. L'inconvénient des barres de torsion résulte dans la nécessité d'avoir des ancrages correspondants dans la caisse, permettant de supporter non seulement le poids du véhicule, mais encore le couple résultant des moments dus aux barres de torsion. Ceci implique des renforcements locaux de la caisse qui pénalisent le prix de revient et le poids de l'assemblage.

En ce qui concerne l'usage des ressorts hélicoïdaux, il implique également l'usage de renforcements au niveau des appuis desdits ressorts soit par un plancher localement consolidé par des longerons, soit encore par des chapelles de roue dimensionnées en conséquence, avec les mêmes inconvénients déjà évoqués. De plus, dans ce dernier cas, l'encombrement de cette réalisation est pénalisant pour les dimensions du coffre à bagages.

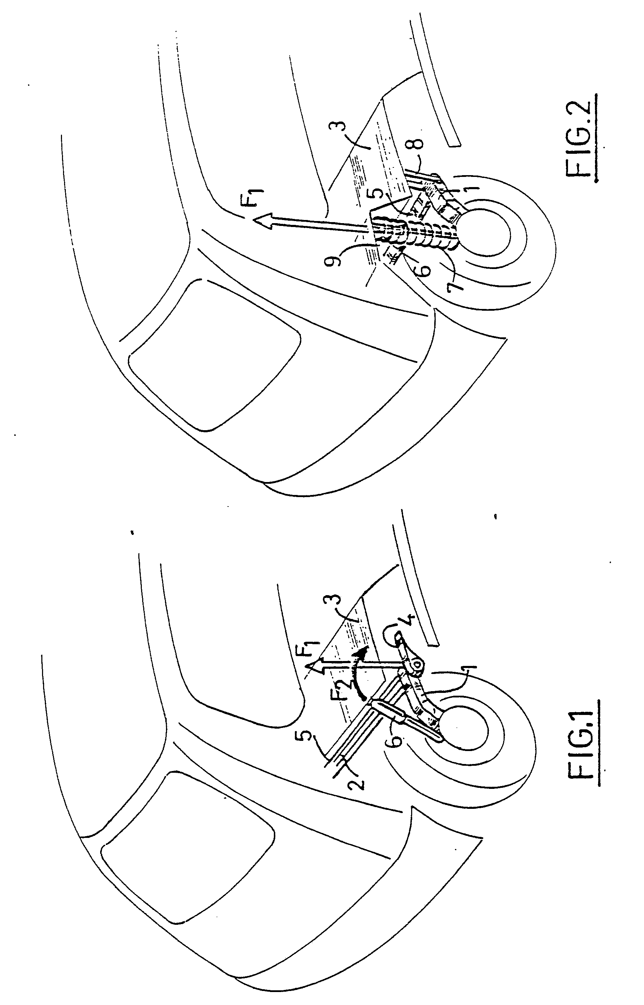

Le train arrière selon la présente invention pallie les inconvénients ci-dessus au moyen des caractéristiques de la revendication 1. Il est remarquable par son faible poids, le grand volume disponible qu'il autorise pour le coffre, la possibilité de fixation aisée et robotisée qu'il permet. Il sera décrit à titre d'exemple non limitatif au regard des figures 1 à 4 ci-jointes qui se rapportent respectivement :

— les figures 1 et 2, à une vue en perspective éclatée de trains arrière selon l'état de la technique antérieure,

— la figure 3, à une vue analogue du train arrière selon l'invention,

— la figure 4, à une vue en perspective et partielle du demi-train de la figure précédente.

Le train arrière, illustré à la figure 1 est essentiellement constitué d'un essieu souple solidaire d'un système à barres de torsion 2, composé d'un bras tiré 1, d'un élément de liaison 5 et d'un amortisseur 6, l'ensemble étant solidarisé à la caisse 3 par l'intermédiaire d'un ancrage 4, qui doit supporter à la fois les efforts selon F1 et les moments selon F2. Ceci implique donc des renforcements spécifiques évoqués précédemment.

Le train arrière selon la figure 2 comporte un essieu souple, composé d'un bras tiré 1, d'un élément de liaison 5, d'un amortisseur vertical 6 et d'un ressort hélicoïdal 7 qui lui est concentrique.

L'ensemble ci-dessus est fixé au plancher de la caisse 3 au niveau de la traverse 8. On notera la présence de renforts spécifiques 9 dans le passage de roue pour encaisser les efforts F1 au niveau de l'appui du ressort 7. A ce niveau, on remarquera l'importance du volume nécessaire à cette disposition, pris sur le volume disponible du coffre à bagages.

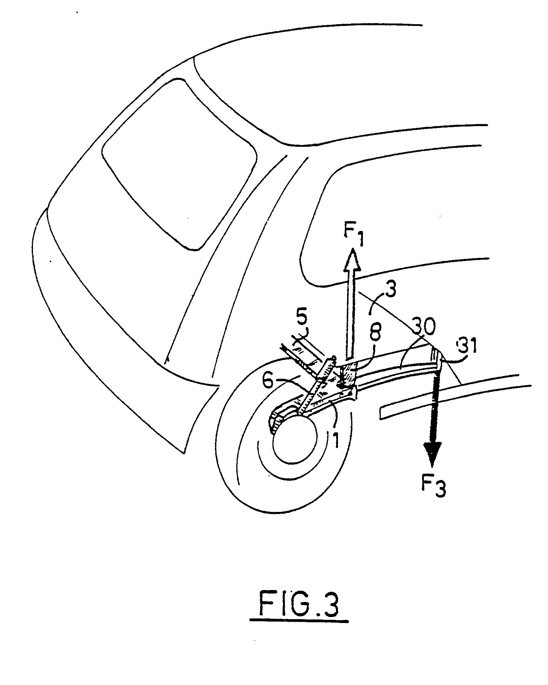

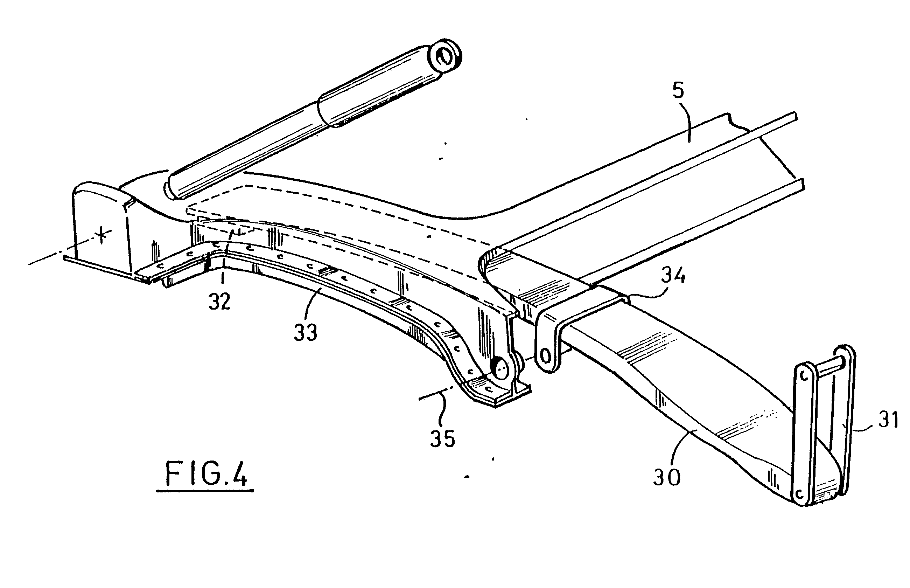

Dans le train arrière de l'invention, illustré aux figures 3 et 4, on retrouve l'essieu souple constitué des bras tirés 1, de l'élément de liaison 5 et de l'amortisseur 6. On voit, particulièrement à la figure 4, que la suspension est assurée par une lame 30 travaillant en flexion articulée par une jumelle 31 à la caisse 3, son extrémité opposée repose par l'intermédiaire d'un tampon en élastomère 32 sur la face inférieure du bras 33 constitué par un caisson et prend ainsi en compte les efforts de suspension F3. Cette disposition de la lame 30 à l'intérieur du bras 33 permet un encombrement réduit de l'ensemble.

Une chape 34, située à proximité du milieu de la lame 30, s'articule sur le même axe 35 que celui qui fixe le bras 33 à la caisse. Toutefois la chape 34 et le bras 33 étant articulés en des endroits distincts sur le même axe 35, on peut utiliser deux natures différentes d'articulations élastiques, plus raide pour la chape 34 qui doit encaisser les efforts longitudinaux et verticaux de la lame 30, plus souple pour le bras 33 qui, dégagée des efforts ci-dessus, est mieux adaptée à la filtration des vibrations en provenance de la roue.

La partie supérieure de la chape 34 prend appui sur une zone naturellement renforcée, constituée par exemple par la traverse arrière 8, et ne nécessite par la pièce de renfort complémentaire.

La fonction de la jumelle 31 est d'encaisser les variations de longueur de la lame 30 en cours de débattement et de la guider transversalement.

On pourra maintenir une hauteur de l'arrière de véhicules de poids différents constante, pour une lame 30 donnée en utilisant des jumelles de longueurs différentes.

On utilise de préférence des lames en matière synthétique renforcée, du type « composite », permettant un gain de poids très sensible par rapport aux ressorts hélicoïdaux ou aux lames métalliques conventionnelles.

On notera que le volume disponible pour le coffre n'est pas pénalisé par la présence de chapelles, ni de renfort particulier et peut être très bas du fait de la compacité de la suspension.

On remarquera enfin que toutes les fixations boulonnées du train sur la caisse peuvent être verticales, facilitant ainsi leur montage automatique robotisé.

# Revendications

1. Train arrière pour suspension de véhicule automobile du type à essieu souple et à bras tiré, caractérisé par le fait que le bras (33), constitué par un caisson creux, donne appui par sa face inférieure à l'une des extrémités d'une lame de ressort (30) pourvue d'un tampon en élastomère (32) qui se loge à mi-longueur dans le bras, l'autre extrémité de la lame étant articulée à la caisse (3) par l'intermédiaire d'une jumelle (31), une chape (34) dont la partie supérieure repose sur une partie naturellement renforcée de la caisse telle que la traverse arrière (8) soutenant la lame (30) à proximité de son milieu et s'articulant sur le même axe (35) qui fixe le bras (33) à la caisse 4 mais en un endroit distinct.

2. Train arrière selon la revendication 1, caractérisé en ce que le bras (33) et la chape (34) sont montés sur l'axe (35) par l'intermédiaire d'articulations élastiques de raideur différente, la plus souple correspondant au bras (33).

3. Train arrière selon la revendication 1, caractérisé en ce qu'il est adapté à des véhicules de poids différents par simple changement de la jumelle (31).

4. Train arrière selon la revendication 1, caractérisé en ce que la lame (30) est en matériau synthétique renforcé du type « composite ».

5. Train arrière selon la revendication 1, caractérisé en ce que ses fixations à la caisse sont disposées verticalement.

## Claims

1. A rear suspension assembly for a motor vehicle of the flexible axle, trailing arm type, characterised in that the arm (33) which is formed by a hollow box member provides support by means of its lower face for one of the ends of a spring blade (30) provided with a buffer (32) of elastomer material which is disposed halfway along the arm, the other end of the blade being pivotally connected to the body (3) by way of a shackle (31), a yoke (34) whose upper part rests on a naturally reinforced part of the body such as the rear cross member (8) supporting the blade (30) in the vicinity of the centre thereof and being pivoted on the same axis (35) which fixes the arm (33) to the body (4) but at a different location.

2. A rear suspension assembly according to claim 1 characterised in that the arm (33) and the yoke (34) are mounted on the axis (35) by way of elastic pivot mountings of different stiffnesses, the more flexible corresponding to the arm (33).

3. A rear suspension assembly according to claim 1 characterised in that it is adapted to vehicles of different weights by a simple change of the shackle (31).

4. A rear suspension assembly according to claim 1 characterised in that the blade (30) is of reinforced synthetic material of the composite type.

5. A rear suspension assembly according to claim 1 characterised in that its fixings to the body are disposed vertically.

## Patentansprüche

1. Hinterachsaufhängung für Kraftfahrzeuge vom Typ elastischer Achsen mit Längslenkern, dadurch gekennzeichnet, daß der Lenker (33), der aus einem Hohlkörper besteht, mit seiner Innenfläche ein Ende einer Blattfeder (30) abstützt, die mit einem Gummipuffer (32) versehen ist, der auf halber Länge im Lenker angeordnet ist, während das andere Ende der Feder an der Karosserie (3) über eine Gabel (31) angelenkt ist, wobei eine Klammer (34), deren oberer Abschnitt auf einem verstärkten Teil der Karosserie ruht, wie z. B. der hinteren Strebe (8), die Feder (30) in der Nähe ihrer Mitte unterstützt und an der gleichen Achse (35) angelenkt ist, die den Lenker (33) mit der Karosserie (4) verbindet, jedoch an einer anderen Stelle.

2. Hinterachse nach Anspruch 1, dadurch gekennzeichnet, daß der Lenker (33) und die Klammer (34) an der Achse (35) mittels elastischer Gelenke befestigt sind, die unterschiedliche Steifigkeiten aufweisen, wobei die weichste dem Lenker (33) entspricht.

3. Hinterachse nach Anspruch 1, dadurch gekennzeichnet, daß sie sich für Fahrzeuge mit unterschiedlichem Gewicht durch einfaches Auswechseln der Gabel (31) eignet.

4. Hinterachse nach Anspruch 1, dadurch gekennzeichnet, daß die Feder (30) aus einem verstärkten zusammengesetzten Kunststoff besteht.

5. Hinterachse nach Anspruch 1, dadurch gekennzeichnet, daß die Befestigungen an der Karosserie senkrecht angeordnet sind.

FIG.1

FIG.2

0 202 964

FIG.3

FIG.4

5

34

31

30

35

33

32

0 202 964